# FASCICULE DE BREVET EUROPEEN

(11) **EP 0 377 361 B1**
(45) Date de publication et mention de la délivrance du brevet: **23.03.1994**
(21) Numéro de dépôt: 89403427.1
(22) Date de dépôt: 11.12.1989
(51) Int. Cl.: H04L 12/40

(54) **Procédé d'optimisation d'émission d'autorisation d'accès à un réseau comportant des canaux ouverts**
Zugangsberechtigungsfreigabe-Optimierungsverfahren zu einem aus offenen Kanälen bestehenden Netz
Optimization method for the authorization release of access to a network constituted by open channels

(30) Priorité: 15.12.1988 FR 8816552
(43) Date de publication de la demande: 11.07.1990
(73) Titulaire: THOMSON CONSUMER ELECTRONICS R&D FRANCE SNC, 92400 Courbevoie (FR)
(72) Inventeur: Saini, Jasjit Singh, F-92045 Paris la Défense (FR); Troian, Pierre, F-92045 Paris la Défense (FR)
(74) Mandataire: Chaverneff, Vladimir

(56) Documents cités:
- EP-A- 0 088 906
- RESEARCH DISCLOSURE, no. 289, mai 1988, pages 267-268, New York, US; "Access protocol and occupation rules for the transmission of data on shared channels"

## Description

La présente invention concerne un procédé d'optimisation d'émission d'autorisation d'accès à un réseau comportant des canaux ouverts.

Dans un réseau de transmission comportant des canaux ouverts, c'est-à-dire des canaux auxquels peuvent accéder des interlocuteurs ne faisant pas partie du réseau (canaux de transmission haute fréquence par exemple), il peut se produire que plusieurs interlocuteurs demandent simultanément accès à ce réseau, ce qui provoque des conflits. De tels conflits sont particulièrement gênants pour l'exploitation du réseau lorsque de nombreux interlocuteurs émettent simultanément leurs demandes d'accès.

La présente invention a pour objet un procédé permettant d'autoriser de façon optimale l'accès à un réseau du type précité, en particulier lorsque de nombreux interlocuteurs le réclament.

Le procédé de l'invention consiste à permettre l'accès à un canal du réseau à un demandeur ayant un message à envoyer sur ce canal si aucune activité ne s'est manifestée sur ce canal pendant un laps de temps déterminé avant la requête de ce demandeur, sinon à surveiller l'occupation du canal et dès qu'il n'est plus occupé, à vérifier pendant un laps de temps de durée déterminée aléatoirement, l'arrivée d'un autre message, à revenir à l'étape de surveillance d'occupation du canal du réseau si pendant ce laps de temps un autre message circule sur ce canal et dans le cas contraire à permettre l'accès du canal au demandeur au bout dudit laps de temps de durée déterminée aléatoirement.

Selon une caractéristique avantageuse de l'invention, après l'envoi du message, le dispositif de contrôle d'accès au réseau au demandeur attend pendant un laps de temps déterminé un accusé de réception du destinataire du message, met fin à la procédure de transmission si l'accusé de réception correct lui parvient avant l'expiration de ce laps de temps, sinon le dispositif de contrôle déclenche une temporisation de durée déterminée aléatoirement, si le canal est occupé à l'expiration de cette temporisation, il revient à l'étape de surveillance d'occupation du canal du réseau, sinon, il envoie à nouveau le message.

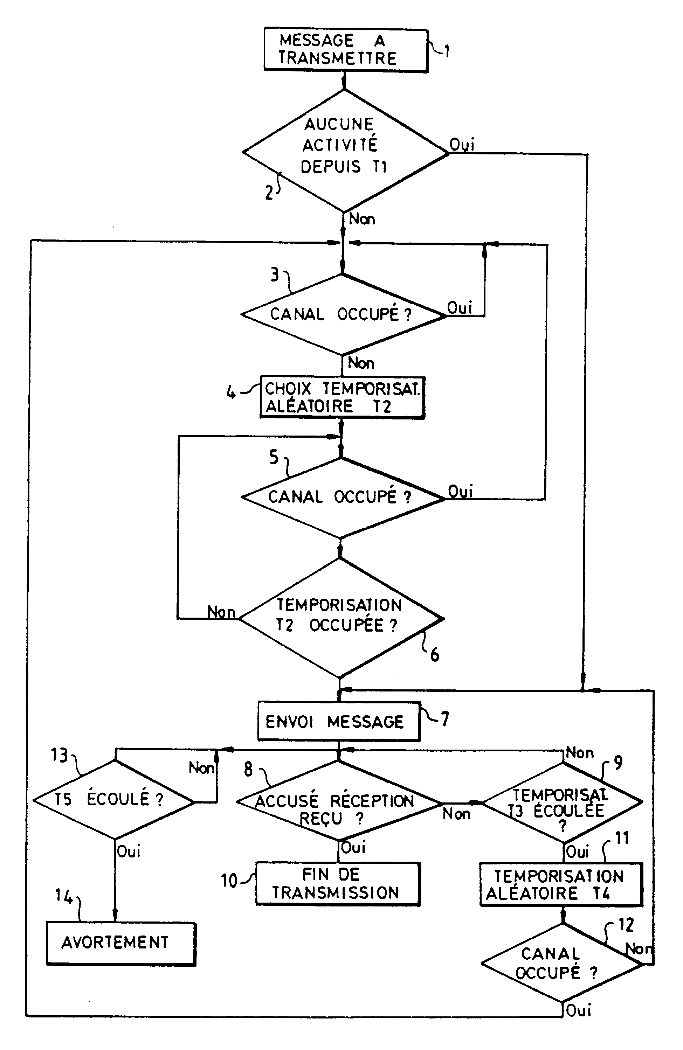

La présente invention sera mieux comprise à la lecture de la description détaillée d'un cas de mise en oeuvre, pris à titre d'exemple non limitatif et illustré par le dessin annexé dont la figure unique est un organigramme du procédé de l'invention.

L'invention est expliquée ci-dessous en référence à un réseau domotique comportant plusieurs canaux de transmission différents : des canaux "fermés" tels que paires de fils torsadés, câbles coaxiaux et... et au moins un canal "ouvert", c'est-à-dire un canal qui peut être capté par des appareils autres que ceux faisant partie de ce réseau. Un exemple typique d'un tel canal ouvert est une liaison radioélectrique haute fréquence. Il est cependant bien entendu que l'invention n'est pas limitée à un tel réseau et peut s'appliquer à d'autres types de réseaux dans lesquels peuvent survenir des conflits dus à des demandes d'accès simultanées de plusieurs demandeurs différents, et même à des réseaux sans canaux ouverts.

On suppose qu'à un instant t1 un demandeur D veut envoyer un message sur un canal d'un réseau. Le dispositif de contrôle d'accès au réseau du demandeur vérifie qu'aucune activité n'a eu lieu sur ce canal pendant un laps de temps T1 avant l'instant t1. Le laps de temps T1 est par exemple d'environ 125ms. Tant que ce canal est occupé, le dispositif de contrôle ne procède pas à d'autres étapes. Dès que le canal n'est plus occupé, le dispositif de contrôle déclenche une temporisation T2 de durée choisie aléatoirement (4). Cette durée est par exemple comprise entre 80 et 150 ms environ. Pendant la durée de la temporisation T2, le dispositif de contrôle vérifie si un message circule sur le canal (5). Si oui, il revient à l'étape 3. Si non, il attend (6) la fin de ladite temporisation de durée choisie aléatoirement. Si aucun message n'est présent sur le canal pendant cette temporisation, le dispositif de contrôle du demandeur D lui permet d'envoyer un message (7).

Si pendant le laps de temps T1 précédant l'instant t1, aucun message n'a circulé sur le canal du réseau (2), le dispositif de contrôle passe aussitôt à l'étape d'envoi de message.

Aussitôt après l'émission du message, le dispositif de contrôle se met en écoute dans l'attente d'un accusé de réception (8). Si cet accusé de réception lui arrive avant l'expiration d'un temps T3 (9), il termine la procédure de transmission (10). Dans le cas contraire, ou si l'accusé de réception est incorrect, le dispositif de contrôle déclenche une temporisation T4 de durée choisie aléatoirement (11). La durée de T4 est par exemple comprise entre 10 et 40 ms environ. A l'expiration de T4, le dispositif de contrôle vérifie si le canal est occupé (12). Si oui, il retourne à l'étape 3. Si non, il envoie à nouveau un message (7).

Pour ne pas immobiliser trop longtemps le réseau, selon une caractéristique avantageuse de l'invention, on déclenche une autre temporisation T5 (13) dès le début de la transmission d'un message. Si le dispositif de contrôle du demandeur n'a pas reconnu d'accusé de réception correct au bout du temps T5, il y a avortement de la tentative de transmission du message (14). Dans ce cas, il peut se produire soit une relance automatique de tout le processus décrit ci-dessus (à partir de l'étape 1), soit déclenchement d'une alarme, soit un arrêt définitif de cette tentative.

## Revendications

1. Procédé d'optimisation d'émission d'autorisation d'accès à un réseau comportant des canaux ouverts, caractérisé par le fait qu'il consiste à permettre l'accès à un canal du réseau à un demandeur ayant un message à envoyer sur ce canal si aucune activité ne s'est manifestée sur ce canal pendant un laps de temps déterminé (T1) avant la requête de ce demandeur, sinon à surveiller l'occupation du canal, et dès qu'il n'est plus occupé, a vérifier, pendant un laps de temps (T2) de durée déterminée aléatoirement, l'arrivée d'un autre message à revenir à l'étape de surveillance d'occupation de ce canal si pendant ce laps de temps un autre message circule sur ce canal et dans le cas contraire à permettre l'accès du canal au demandeur au bout dudit laps de temps de durée déterminée aléatoirement.

2. Procédé selon la revendication 1, caractérisé par le fait que lorsque le message du demandeur a été envoyé, son dispositif de contrôle d'accès au réseau attend pendant un laps de temps déterminé (T3) un accusé de réception de ce message, termine la transmission si l'accusé de réception correct lui parvient avant l'expiration de ce laps de temps, sinon le dispositif de contrôle déclenche une temporisation de durée déterminée aléatoirement, si le canal est occupé à l'expiration de cette temporisation il revient à l'étape de surveillance d'occupation du canal du réseau, sinon il envoie à nouveau un message.

## Claims

1. Method for optimizing the issuing of authorization to access a network constituted by open channels, characterized in that it consists in allowing access to a channel of the network to a requester having a message to send on this channel if no activity has occurred on this channel during a defined time lapse (T1) before the request of this requester, or else in monitoring the occupation of the channel, and as soon as it is no longer occupied, in verifying, during a time lapse (T2) of randomly defined duration, the arrival of another message, in returning to the step of monitoring the occupation of this channel if, during this time lapse, another message is sent down this channel and, if not, in allowing the requester access to the channel at the end of the said time lapse of randomly defined duration.

2. Method according to Claim 1, characterized in that, when the message of the requester has been sent, his network access control device waits over a defined time lapse (T3) for an acknowledgement of reception of this message, terminates the transmission if the acknowledgement of correct reception reaches him before this time lapse has expired, otherwise the control device triggers a delay of randomly defined duration, if the channel is occupied on expiry of this delay it returns to the step of monitoring the occupation of the channel of the network, otherwise it again sends a message.

## Patentansprüche

1. Verfahren zum Optimieren der Zugangsberechtigungsfreigabe zu einem aus offenen Kanälen bestehenden Netz, gekennzeichnet durch die Tatsache, daß es darin besteht, den Zugang zu einem Kanal des Netzes einem Antragsteller zu gewähren, der eine Nachricht über diesen Kanal zu versenden hat, wenn keine Aktivität auf diesem Kanal während einer bestimmten Zeitperiode (T1) vor der Anforderung durch diesen Antragsteller stattgefunden hat, während sonst die Kanalbesetzung überwacht wird, und, sobald er nicht mehr besetzt ist, während einer Zeitperiode (T2) mit auf Zufallsbasis bestimmter Dauer die Ankunft einer anderen, während der Besetzungsüberwachungsstufe dieses Kanals auftretenden Nachricht zu verifizieren, wenn während dieser Zeitdauer eine andere Nachricht auf diesen Kanal zirkuliert, und im gegenteiligen Fall dem Antragsteller den Zugang zum Kanal am Ende der Zeitperiode mit auf Zufallsbasis bestimmter Dauer zu gewähren.

2. Verfahren nach Anspruch 1, gekennzeichnet durch die Tatsache, daß dann, wenn die Nachricht des Antragstellers abgeschickt worden ist, seine Vorrichtung zum Steuern des Zugangs zum Netz während einer vorbestimmten Zeitperiode (T3) eine Empangsbestätigung dieser Nachricht erwartet, die Übertragung beendet, wenn die richtige Empfangsbestätigung bei ihr vor Ablauf dieser Zeitperiode aufgetreten ist, während die Steuervorrichtung sonst eine Zeitverzögerung mit auf Zufallsbasis bestimmter Dauer auslöst, wobei sie dann, wenn der Kanal beim Ablauf dieser Verzögerung besetzt ist, zur Kanalbesetzungsüberwachungsstufe des Netzes zurückkehrt, während sie sonst erneut eine Nachricht abschickt.
